# EUROPEAN PATENT SPECIFICATION

(11) **EP 2 676 758 B1**
(45) Date of publication and mention of the grant of the patent: **23.11.2016**
(21) Application number: 11862152.3
(22) Date of filing: 25.03.2011
(51) Int. Cl.: B23K 9/028, B23K 33/00, E04H 12/08

(54) **STEEL PIPE HAVING FLANGE DISK WELDED THERETO**
STAHLROHR MIT ANGESCHWEISSTER FLANSCHPLATTE
TUBE D'ACIER AUQUEL EST SOUDÉ UN DISQUE BRIDE

(43) Date of publication of application: 25.12.2013
(73) Proprietor: Nippon Steel & Sumitomo Metal Corporation, Tokyo 100-8071 (JP)
(72) Inventor: HONMA Ryuichi, Tokyo 100-8071 (JP); ISHIKAWA Tadashi, Tokyo 100-8071 (JP); SHIMANUKI Hiroshi, Tokyo 100-8071 (JP)
(74) Representative: Vossius & Partner Patentanwälte Rechtsanwälte mbB
(86) International application number: PCT/JP2011/057434
(87) International publication number: WO 2012/131852

(56) References cited:
- WO-A1-2009/028092
- DE-U1-202008 006 307
- JP-A- 2004 525 293
- JP-U- 60 077 661
- JP-U- H03 108 765

## Description

The present invention relates to a flange disk-welded steel pipe.

In recent years, in order to decrease CO₂ gas which is considered to be a cause of global warming or cope with future depletion of fossil fuels such as oil, using renewable natural energy has been positively attempt. Wind power generation is one of them, and wind power generation has been widespread worldwide.

Here, areas which are most suitable for wind power generation are areas which can expect constant strong winds. Therefore, wind power generation on the ocean (offshore wind power generation), which satisfies suitable conditions, has been planned and realized in most countries of the world (refer to Patent Documents 1 to 6).

When a tower for wind power generation is constructed on the ocean, in order to improve stability of the wind power generation tower, it is necessary to drive a base portion of the tower into the ground of the ocean floor. Moreover, in order to stably maintain a turbine blade of a wind power generator at a position which is sufficiently positioned high above the sea level, a steel-pipe column, which is installed at the base portion of the tower or on the base portion, is required to have a sufficient height. For example, the height should be 80 m or more.

In this way, the tower for the offshore wind power generation is a huge steel structure, and is continuously exposed to strong winds and waves. Thereby, the entire tower is repeatedly subjected to continuous loads due to strong winds, waves, or vibration due to rotation of a turbine blade.

That is, under these circumstances, a welded portion between the base portion of the tower and the steel-pipe column installed on the base portion requires fatigue resistance properties with respect to vibration of the gigacycle range (10^{9~10}) having an order different from a normal fatigue cycle (10^{6~7}).

Therefore, development of a welding method is required to form a welded joint which can endure vibration circumstances of the gigacycle range in the construction of the offshore wind power generation tower.

### [Patent Document]

[Patent Document 1] Japanese Unexamined Patent Application, First Publication No. 2008-111406
[Patent Document 2] Japanese Unexamined Patent Application, First Publication No. 2007-092406
[Patent Document 3] Japanese Unexamined Patent Application, First Publication No. 2007-322400
[Patent Document 4] Japanese Unexamined Patent Application, First Publication No. 2006-037397
[Patent Document 5] Japanese Unexamined Patent Application, First Publication No. 2005-194792
[Patent Document 6] Japanese Unexamined Patent Application, First DE 20 2008 006 307 U1 discloses a flange piece for a tower for a wind power plant and a tower for a wind power plant.

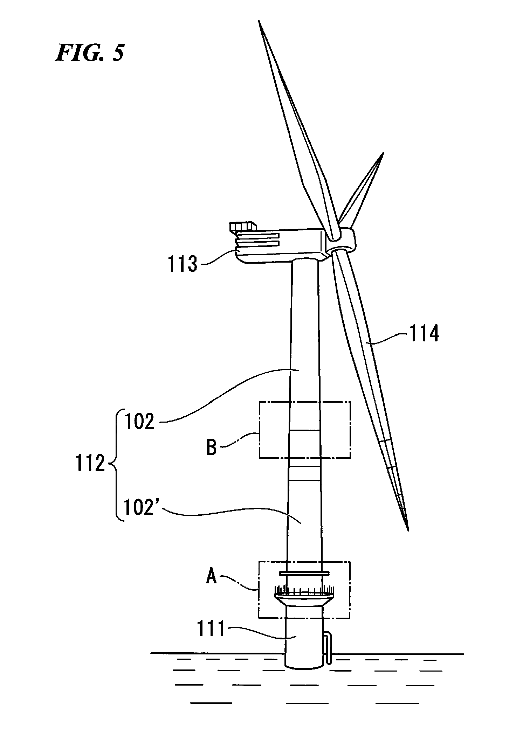

FIG 5 shows a schematic view of a tower for an offshore wind power generation of the related art. In the offshore wind power generation tower, a steel-pipe column 112 having a pipe diameter of 3 m to 5 m and a pipe thickness of 30 mm to 80 mm is disposed on the basic structure (base portion) 111, and a nacelle 113 which includes a turbine blade 114 is disposed on an apex of the steel-pipe column 112.

Moreover, since the height of the offshore wind power generation tower is 80 m or more and the tower is continuously subjected to vibration circumstances of gigacycle, a junction A of the basic structure 111 and the steel pipe 102', and a junction B of the steel pipe 102' and a steel pipe 102 have to endure vibration of gigacycle.

Moreover, when the above-described offshore wind power generation tower is constructed, a joint of the steel pipe 102' and the steel pipe 102, for use as a steel-pipe column 112, may be a pipe joint which uses a flange. Also in this case, mounting, which is not a pipe joint using the flange, of the steel-pipe column 112 to the basic structure 111, and joining between a flange member (flange) and the basic structure 111, the steel pipe 102', and the steel pipe 102 each are performed by arc welding (hereinafter, simply referred to as welding) or the like. In this way, when the pipe joint which uses the flange is adopted, it is important to secure fatigue resistance properties at the junction and in the vicinity of the junction.

Hereinafter, the junction B in FIG 5 will be described in detail.

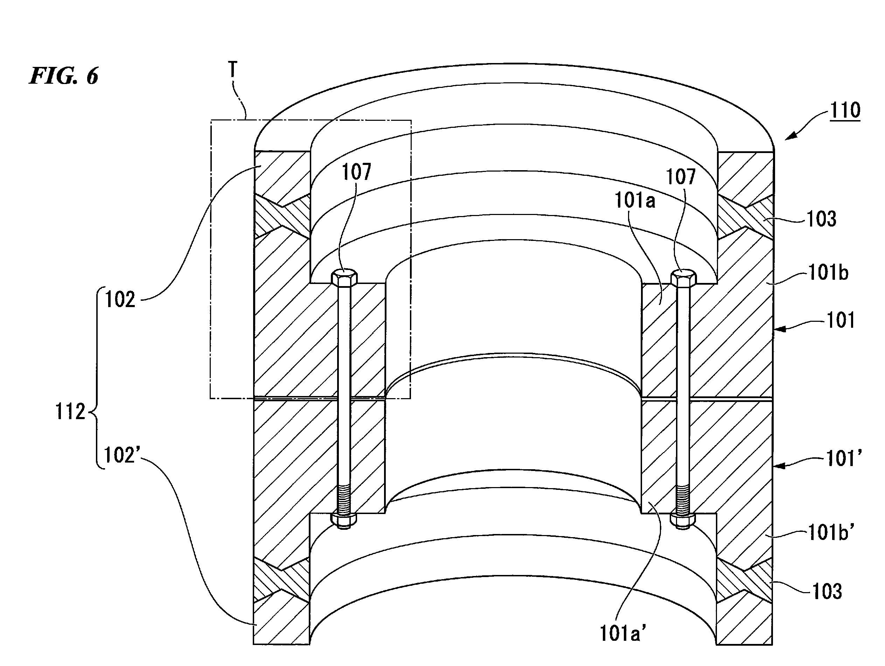

FIG 6 is a cross-sectional schematic view in a pipe axis direction of the steel-pipe column 112 in the junction B in FIG. 5.

A flange disk (hereinafter, simply referred to as flange) 101 is joined to an end surface of the steel pipe 102 via a weld metal portion 103, and thus, a flange disk-welded steel pipe 110 is formed. Moreover, the flange 101 is approximately configured of a flange portion 101a having a flat ring shape and a connection portion 101b, and the connection portion 101b and the steel pipe 102 are joined by welding. Here, the flange disk positioned at the inner circumference side (inner surface side) from a flange comer 101c described below is referred to as the flange portion 101a, and the flange disk positioned at the outer circumference side (outer surface side) from the flange comer 101c is referred to as the connection portion 101b. Moreover, the steel pipe 102' and the flange 101' also have a similar structure. Furthermore, the connection portions 101b and 101b' are provided so as to surround the outer circumferences of each of the flange portions 101a and 101a'.

Moreover, the flange portion 101a and the flange portion 101a' are fastened by bolts 107, and thus the steel pipe 102 and the steel pipe 102' are connected to each other and form the steel-pipe column 112.

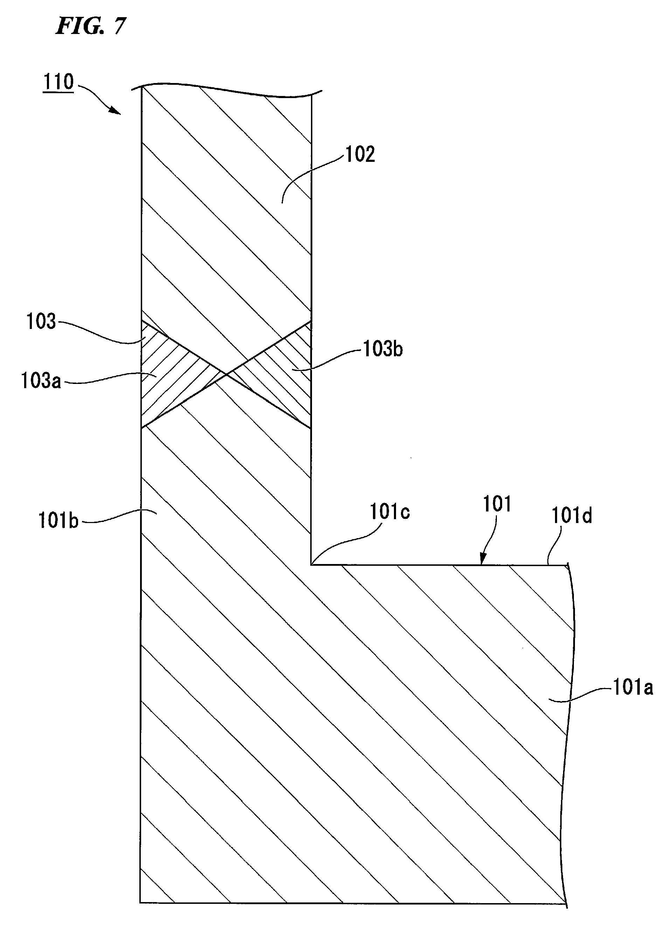

FIG 7 is an enlarged cross-sectional schematic view of a T portion shown in FIG 6.

As shown in FIG 7, the end surface of the steel pipe 102 and the junction 101b of the flange disk 101c are joined to each other by welding grooves (an X shape groove) which are provided in an V shape from each of the inner and outer surfaces of the steel pipe 102 and the connection portion 101b.

In this way, if the steel pipe 102 and the flange 101 are welded, in general, tensile residual stresses in the pipe axis direction occur on the weld metal portion 103 and the surfaces of the inner surface sides of each of the steel pipe 102 and the connection portion 101b in the vicinity of the metal portion 103. On the other hand, when the entire offshore wind power generation tower is vibrated, the location, which requires the fatigue properties which is the severest, is the flange comer 101c c which is a portion in which stress is concentrated and which crosses a surface 101d of the connection portion side of the flange portion 101a and the inner surface of the connection portion 101b.

Therefore, in the related art, in order to make the flange corner 101c not be included in the region in which tensile residual stresses occur due to the welding, a structure is designed so that the length of the connection portion 101b in the pipe axis direction is sufficiently long and the weld metal portion 103 and the flange corner 101c are sufficiently separated from each other.

However, according to an increase in the size of the offshore wind power generation tower, further improvement of fatigue resistance properties is required, the diameter of the steel-pipe column which configures the offshore wind power generation tower is increased, and the steel material (steel pipe) which is used as the steel-pipe column is thickened. However, in the case, naturally, the weight of the flange is also increased.

In general, a large flange for the offshore wind power generation tower is a costly forging product. Thereby, the increase in the weight of the costly flange generates the increase of the entire cost of the offshore wind power generation tower, and thus, it is a subject to decrease the weight of the flange and suppress the increase of the cost. Moreover, as described above, since each of the base portion and the steel-pipe column of the offshore wind power generation tower and the welded portion of the connection portion of the flange require fatigue resistance properties which endure vibration of gigacycle range, it is a subject to achieve both improvement of the fatigue resistance properties and weight reduction of the flange.

Therefore, an object of the present invention is to provide a flange disk-welded steel pipe that has fatigue properties which endure vibration of gigacycle range when a lightweight flange is welded to the steel pipe.

### [Means for solving the Problems]

In the present invention, as measures of the above-described problem, in a cross-section including a pipe axis of a steel pipe of a weld metal portion, a connection portion and an end of the steel pipe are welded to each other so that a cross-sectional area of a weld metal portion of an outer circumferential side (outer surface side) from 1/2 line of a pipe thickness (center line of pipe thickness), that is, a center of the pipe thickness is 1.5 times or more a cross-sectional area of the weld metal portion of the inner circumferential side (inner surface side). Moreover, a distance between a weld toe of a flange side in the inner surface side of the weld metal portion and a flange corner is managed so as to be a constant value. Thereby, compressive residual stress is applied to the flange corner, and fatigue properties with respect to vibration of gigacycle of gigacycle range in a flange disk-welded steel pipe are improved.

The gist of the present invention is as follows.
(1) In a flange disk-welded steel pipe according to an aspect of the present invention, there is provided a flange disk-welded steel pipe in which a flange disk is welded at an end thereof in a pipe axis direction, including: a flange disk which includes a flange portion having a flat ring shape, and a connection portion which is positioned at an outer circumferential side of the flange portion and has an annular portion in which at least a portion protrudes from one surface side of the flange portion; a steel pipe which is welded to the one surface side of the connection portion and has a pipe thickness t (mm); and a weld metal portion which is formed by welding between the connection portion and the steel pipe, wherein in the cross-section including a pipe axis of the steel pipe, of the weld metal portion, a cross-sectional area So of an outer circumferential side from a center in a pipe thickness direction of the steel pipe and a cross-sectional area S_{I} of an inner circumferential side satisfy a relationship of S_{O}≥1.5S_{I}, and wherein a distance, between a weld toe of the flange portion side in an inner surface side of the weld metal portion and a flange corner which is a portion where an inner surface of the connection portion and the one surface of the flange portion cross, is 5 mm or more and the pipe thickness t or less.
(2) In the flange disk-welded steel pipe according to (1), a length in a pipe axis direction of a side surface of an outer circumferential side of the flange disk may be smaller than a plate thickness of the flange portion.
(3) In the flange disk-welded steel pipe according to (1) or (2), compressive residual stress may be formed on the flange corner by the welding.
(4) In the flange disk-welded steel pipe according to (1) or (2), the pipe thickness t of the steel pipe may be 30 mm or more.
(5) In the flange disk-welded steel pipe according to (1) or (2), the steel pipe The problem above can be solved by the features defined in the claims.

According to the present invention, in the steel pipe to which the flange disk is joined by welding, in the cross-section including the pipe axis of the steel pipe of the weld metal portion, since the cross-sectional area So of the outer circumferential side from the center of the steel pipe in the pipe thickness direction of the steel pipe is larger than 1.5 times the cross-sectional area S_{I} of the inner circumferential side of the steel pipe, and the distance between the weld metal portion of the inner circumferential side and the flange corner is sufficiently small, compressive stress can remain on the surface of the weld metal portion of the inner circumferential side and in the vicinity of the surface. Moreover, by positioning the flange corner in the generated region of the compressive residual stress, the flange disk-welded steel pipe which has fatigue resistance properties in vibration of gigacycle range can be provided.

The invention is described in detail in conjunction with the drawings, in which:
FIG. 1 is a cross-sectional schematic view illustrating a flange disk-welded steel pipe of the present embodiment.
FIG. 2A is a cross-sectional schematic view illustrating a stress distribution in the vicinity of a weld metal portion of a flange disk-welded steel pipe of the related art.
FIG 2B is a graph showing a stress distribution in line X-X' of FIG 2A.
FIG 2C is a graph showing a stress distribution in line Y-Y' of FIG. 2A.
FIG 3A is a cross-sectional schematic view illustrating a stress distribution in the vicinity of a weld metal portion of a flange disk-welded steel pipe of the present embodiment.
FIG 3B is a graph showing a stress distribution in line X-X' of FIG 3A.
FIG 3C is a graph showing a stress distribution in line Y-Y' of FIG. 3A.
FIG 4 is a cross-sectional schematic view of a flange disk.
FIG. 5 is a schematic view illustrating a structure of a tower for an offshore wind power generation.
FIG. 6 is a cross-sectional schematic view in a pipe axis direction of a steel pipe 102 in a junction B of FIG 5.
FIG. 7 is an enlarged cross-sectional schematic view of a T portion shown in FIG 6.
FIG 8 is a cross-sectional schematic view of the flange disk-welded steel pipe for illustrating a groove shape in Example of the present invention.
FIG 9 is a perspective view of a plate-like test piece.
FIG. 10 is a graph showing results of a fatigue test and a preliminary fatigue test in Example of the present invention.
FIG 11 is a schematic view illustrating a method of the preliminary fatigue test in Example of the present invention.

In the present invention, in a flange disk-welded steel pipe, a groove, which is defined by a flange side groove surface provided on an end of the flange disk and a steel-pipe column side groove surface provided on an end of a steel pipe, is welded. Moreover, the flange disk of the present invention is approximately configured of a flange portion having a flat ring shape, and a connection portion which is positioned at an outer circumferential side of the flange portion and has an annular portion in which at least a portion thereof protrudes from one surface side (a surface of the side to which the steel pipe is welded) of the flange portion. In addition, the groove, which is defined by the flange side groove surface and the steel pipe side groove surface, is an X shape groove, a V shape groove, an single bevel groove, a K shape groove, a U shape groove, or the like.

Hereinafter, the flange disk-welded steel pipe according an embodiment of the present invention will be described referring to the drawings.

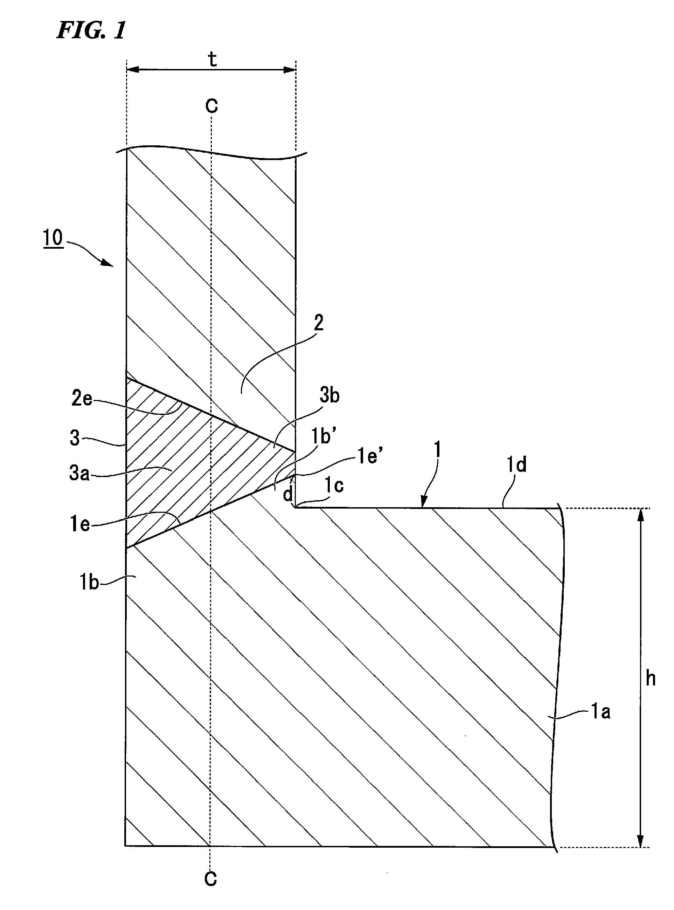

FIG. 1 is a cross-sectional schematic view in a pipe axis direction of the flange disk-welded steel pipe in the present embodiment.

As shown in FIG 1, a flange disk-welded steel pipe 10 according to the present embodiment includes: a flange disk 1 which includes a flange portion 1a having a flat ring shape, and a connection portion 1b which is positioned at an outer circumferential side of the flange portion 1a and includes an annular portion 1b' in which at least a portion thereof protrudes from one surface (a surface of the side to which the steel pipe 2 is welded) 1d side of the flange portion 1a; a steel pipe 2 which is welded to the flange disk 1 and in which a pipe thickness is t (mm); and a weld metal portion 3 described below. Moreover, the steel pipe 2 is welded to the one surface 1d side of the flange disk 1.

Moreover, the flange disk 1 includes a flange side groove surface 1e which is formed on an end of the flange disk 1 which faces the steel pipe 2, and the steel pipe 2 includes a steel pipe side groove surface 2e which is formed on an end of the steel pipe 2 which faces the flange disk 1.

Furthermore, a groove between the flange disk 1 and the steel pipe 2, which is defined by the flange side groove surface 1e and the steel pipe side groove surface 2e, is welded, and thereby, the weld metal portion 3 is formed. Moreover, in a cross-section of the weld metal portion 3 shown in FIG 1, a cross-sectional area So of an outer circumferential side from a center line (line C-C) in a pipe thickness direction of the steel pipe 2 (a thickness direction of the steel pipe 2) is larger than 1.5 times a cross-sectional area S_{I} of an inner circumferential side of the steel pipe 2, and a distance, between a weld toe 1e' of the flange portion 1a side in an inner surface side of the weld metal portion 3 and the flange corner 1c which is the portion where the one surface 1d and the inner surface of the connection portion 1b cross, is 5 mm or more and a pipe thickness t or less.

Here, in a structure which uses a flange disk-welded steel pipe of the related art as shown in FIG 7, in general, from the viewpoint of welding efficiency, an X shape groove is adopted as a groove of the weld metal portion 103. Moreover, as described above, in the structure of the related art, there is a problem that tensile residual stresses in a steel pipe axis direction occur on surface regions of the weld metal portion 103, a steel pipe 102 and a connection portion 101b in the vicinity of the weld metal portion.

In order to solve the problem, in the structure of the related art, it is considered to be important that the weld metal portion 103 is formed so as to be further separated from a flange corner 101c, as much as possible, the flange corner 101c is not included in a region in which tensile residual stresses occur, and thus, influences of the tensile residual stresses to the flange corner 101c are decreased as much as possible.

However, in order to separate the weld metal portion 103 from the flange corner 101c, as much as possible, a length in the pipe axis direction of the connection portion 101b cannot avoid being increased, and as a result, there is a problem that weight of the costly flange 101 is increased.

Thus, the inventors eagerly reviewed a joint structure which can be shorten for weight reduction of the connection portion 101b of the flange, and in which the flange corner 101c, in which stress is concentrated, has fatigue properties which endure vibration of a gigacycle range.

Hereinafter, the flange disk-welded steel pipe 10 in the present embodiment will be described in detail.

As shown in FIG 1, a flange disk-welded steel pipe 10 of the present embodiment is approximately configured of: a flange disk 1 which includes the flange portion 1a having a flat ring shape, and a connection portion 1b which is positioned at an outer circumferential side of the flange portion 1a and includes an annular portion 1b' in which at least a portion protrudes from one surface (a surface of the side to which the steel pipe 2 is welded) 1d side of the flange portion 1a; a steel pipe 2 which is welded to the flange disk 1 and in which a pipe thickness is t (mm); and the weld metal portion 3 described below.

Moreover, the flange disk 1 includes a flange side groove surface 1e which is formed on an end thereof which faces the steel pipe 2, and the steel pipe 2 includes the steel pipe side groove surface 2e which is formed on an end thereof which faces the flange 1.

Furthermore, the groove between the flange disk 1 and the steel pipe 2, which is defined by the flange side groove surface 1e and the steel pipe side groove surface 2e, is welded, and thereby, the weld metal portion 3 is formed. The weld metal portion 3 penetrates the steel pipe 2 in the pipe thickness direction (the thickness direction of the steel pipe 2).

Moreover, in present embodiment, an opening portion which penetrates in the pipe axis direction is formed in a center portion in a radial direction of the flange disk 1 so that a person moves in order to perform inspection or the like of an inner portion of the steel-pipe column.

Furthermore, in the present embodiment, in the cross-section including a pipe axis of the steel pipe 2, of the weld metal portion 3, the cross-sectional area So of the outer circumferential side of the steel pipe 2 from the center in the pipe thickness direction (the thickness direction of the steel pipe 2) of the steel pipe 2 and the cross-sectional area S_{I} of the inner circumferential side of the steel pipe 2 are needed to satisfy a relationship of S_{O}≥1.5S_{I}. That is, as shown in FIG. 1, the cross-sectional area So of an outer circumferential side weld metal portion 3a, which is formed on the outer circumferential side from line C-C which is the center (1/2) line of the pipe thickness of the steel pipe 2, that is, the center of the pipe thickness, is set to 1.5 times or more the cross-sectional area S_{I} of an inner circumferential side weld metal portion 3b which is formed on the inner circumferential side from the center of the pipe thickness. Hereinafter, reasons for limitation of the cross-sectional area So and the cross-sectional area S_{I} will be described.

As shown in FIG 1, in the cross-section including the pipe axis of the steel pipe 2, the weld metal portion 3 of the present embodiment is formed so that the cross-sectional area So of the outer circumferential side from the center in the pipe thickness direction of the steel pipe 2 and the cross-sectional area S_{I} of the inner circumferential side satisfy the relationship of S_{O}≥1.5S_{I}. That is, the weld metal portion 3 has a structure in which an amount of weld metal of the weld metal portion 3a of the outer circumferential side of the weld metal portion 3 is more than an amount of weld metal of the weld metal portion 3b of the inner circumferential side of the weld metal portion 3, and thus, compressive stress can remain in a region from the inner circumferential side surface of the weld metal portion 3 to the flange corner 1c.

Moreover, if the cross-sectional area So is less than 1.5 times the cross-sectional area S_{I}, the compressive stress, which remains in the region from the inner circumferential side surface of the weld metal portion 3 to the flange corner 1c, cannot be sufficiently secured, and thus, there is a concern that fatigue resistance properties of the flange corner 1c may not be sufficiently obtained. Therefore, in the present embodiment, S_{O}≥1.5 S_{I} is set. Moreover, in order to further exert improvement effects of the fatigue resistance properties, S_{O}≥2.0S_{I} is preferably satisfied, and S_{O≥}2.5S_{I} is more preferably satisfied.

In this way, since the cross-sectional area So is larger than the cross-sectional area S_{I}, compressive stress can remain in the region from the inner circumferential side surface of the weld metal portion 3 to the flange corner 1c.

Moreover, in the present embodiment, a distance d between the weld toe 1e' of the flange portion 1a side in the inner circumferential side of the weld metal portion 3b and the flange corner 1c is required to be 5 mm or more and the pipe thickness t or less.

If the distance d is too small, stress concentration influences the weld toe 1e' of the flange portion 1a side of the inner circumferential side weld metal portion 3b, and since there is a concern that the fatigue resistance properties of the flange corner 1c may be deteriorated, the distance d is set to 5 mm or more. Furthermore, if the distance d exceeds the pipe thickness t, the position of the flange corner 1c is outside a range of a residual region of the compressive stress, and the fatigue resistance properties of the flange corner 1c cannot be sufficiently obtained, therefore, the distance d is set to the pipe thickness t or less. Moreover, in order to further exert improvement effects of the fatigue resistance properties, it is preferable that the lower limit of the distance d is 8 mm or 10 mm and the upper limit of the distance d is 80% or 65 % of the pipe thickness t.

Here, the stress distribution of the weld metal portion 3 and in the vicinity thereof in the present embodiment will be described while comparing the structure of the flange disk-welded steel pipe 110 of the related art.

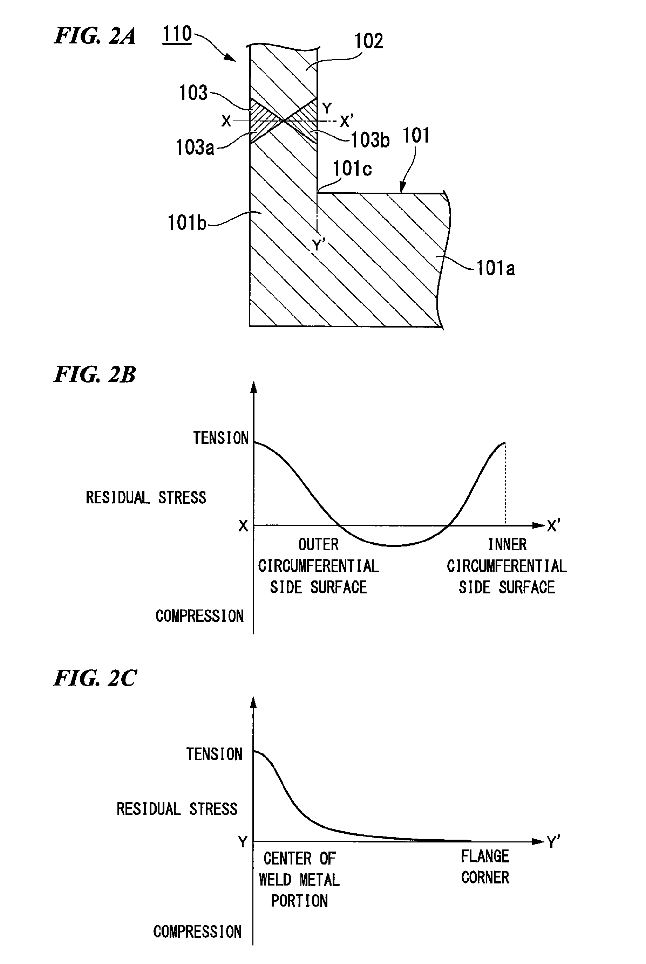

FIG 2A is a cross-sectional schematic view in the pipe axis direction of the flange disk-welded steel pipe of the related art which adopts an X shape groove.

FIGS. 2B and 2C show the stress distribution in the vicinity of the weld metal portion 103 of the flange disk-welded steel pipe shown in FIG 2A. In addition, FIG. 2B shows the stress distribution in a center X-X' of the weld metal portion 103, and FIG 2C shows the stress distribution in Y-Y' (perpendicular to X-X') which extends over the flange corner 101c from the center of the weld metal portion 103a surface of the inner circumferential side of the steel pipe.

When the structure of the related art is adopted as the structure of the flange disk-welded steel pipe, as shown in FIG 2B, the compressive stress remains only in a center portion in a radial direction of the weld metal portion 103, and tensile stress remains in the outer circumferential side and the inner circumferential side of the weld metal portion 103.

Moreover, as shown in FIG. 2C, the residual stress in a direction perpendicular to a weld line from the inner circumferential side weld metal portion 103b to the flange corner 101c is always tensile stress.

Thereby, in the related art, it is considered that it is the best mesure to increase the length in the pipe axis direction of the connection portion 101b while taking into consideration of displacing the flange corner 101c outside the region, in which the tensile stress remains, so as not to influence the fatigue properties of the flange corner 101c. Thereby, the size of the flange 101 is increased, and costs of the flange 101 are increased.

Here, when a weld metal portion of a V shape groove, in which a width of the groove of the outer circumferential side is wide, is formed while restraining deformation due to welding, the residual stress in the direction, which is perpendicular to the outer circumferential side surface of the weld metal portion and the weld line in the vicinity thereof, is tensile stress. On the other hand, the residual stress on the inner circumferential side surface of the weld metal portion is compressive stress. This is because the width of the groove of the outer circumferential side is relatively wider than that of the inner circumferential side and the amount of weld metal of the outer circumferential side is more than that of the inner circumferential side.

By using the phenomenon, the inventors review the groove shape in the flange disk-welded steel pipe, and consider that both improvements of the fatigue resistance properties of the flange corner and weight reduction of the flange disk can be achieved if compressive residual stress can be applied to the inner circumferential side weld metal portion and the flange corner.

That is, in order to use the compressive stress which remains on the surface of the inner circumferential side weld metal portion 3b and in the vicinity thereof at the maximum, the present embodiment has the structure in which the flange portion side weld toe of the inner circumferential side weld metal portion 3b approaches the flange corner 1c. That is, the structure of the flange disk-welded steel pipe 10 of the present embodiment embodies a new idea which is completely reverse to the idea of the related art.

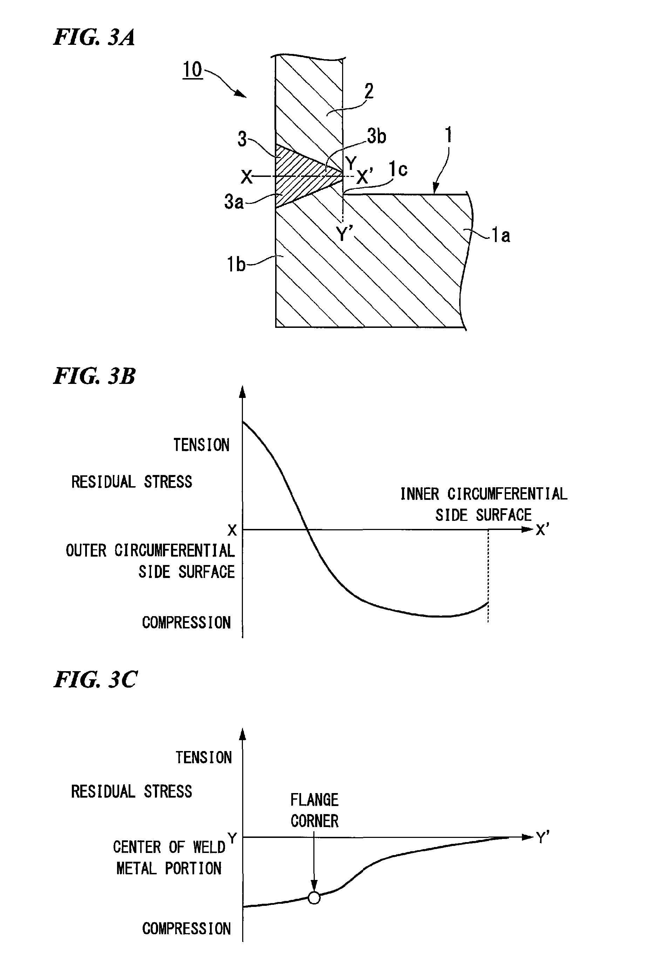

FIG. 3A is a cross-sectional schematic view in the pipe axis direction of the flange disk 1 welded steel pipe 2 of the present embodiment.

FIGS. 3B and 3C show the stress distribution in the vicinity of the weld metal portion 3 shown in FIG. 3A. In addition, FIG. 3B shows the stress distribution in a center X-X' of the weld metal portion 3, and FIG. 3C shows the stress distribution in Y-Y' which extends over the flange corner 1c from the center of the weld metal portion 3a surface of the inner circumferential side of the steel pipe (inner surface side).

According to the flange disk-welded steel pipe 10 of the present embodiment, as shown in FIG. 3B, on the outer circumferential side surface and the inner circumferential side surface of the weld metal portion 3, the residual stress in the radial direction (X-X' in FIG 3A) of the steel pipe is tensile stress in the flange outer circumferential side, but the residual stress is compressive stress in the inner circumferential side.

Furthermore, as shown in FIG 3C, the residual stress in the direction perpendicular to the weld line (Y-Y' in the drawing) from the inner circumferential side surface of the weld metal portion 3 to the flange corner 1c is compressive stress by disposing the flange corner 1c in the vicinity of the weld metal portion 3.

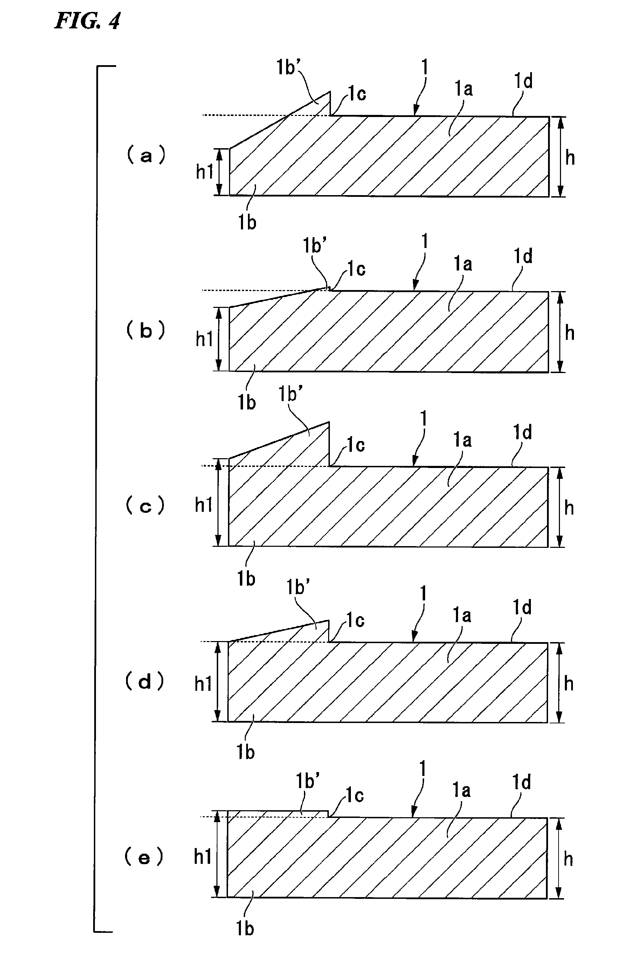

Next, the structure of the flange disk 1 in the present embodiment will be described. FIGS. 4(a) to 4(e) show the structure of the flange disk 1.

In the present embodiment, the flange disk 1 is approximately configured of the flange portion 1a having a flat ring shape which is positioned at the inner side in the radial direction of the steel pipe from the flange corner 1c, and the connection portion 1b which is positioned at the outer circumferential side of the flange portion 1a and includes the annular portion 1b' in which at least a portion thereof protrudes from one surface 1d side of the flange portion 1a. Moreover, the flange disk 1 includes the flange corner 1c which is the portion where the one surface 1d and the inner surface of the connection portion 1b cross.

In the present embodiment, as shown in FIGS. 4(a) and 4(b), the length h1 is smaller than the plate thickness h of the flange portion 1a. Furthermore, the length h1 in the pipe axis direction of the outer side surface of the connection portion 1b of the flange disk 1 may be considered as the plate thickness on the outer circumferential end surface of the flange disk 1.

When the length h1 is smaller than the plate thickness h of the flange portion 1a, the condition of the above-described distance d is satisfied and S_{O}≥1.5S_{I} which is the above-described relationship between the cross-sectional area So and the cross-sectional area S_{I} can be easily satisfied. As a result, the cross-sectional area So can be more easily secured than the cross-sectional area S_{I}, and thus, the effects in the present embodiment can be easily obtained. That is, the compressive stress, which remains in the region from the inner circumferential side surface of the weld metal portion 3 to the flange corner 1c, can be increased, and thus, fatigue resistance properties of the flange corner 1c can be further improved.

Moreover, a distance, between a portion where a surface opposite to the one surface 1d which is the side welded to the steel pipe and the outer side surface of the flange disk 1 cross, in the flange disk 1, and the weld toe of the flange disk 1 side in the outer surface side of the weld metal portion 3, may be considered as the length h1.

Moreover, as described above, the connection portion 1b in the present embodiment includes the annular portion 1b' which is positioned on the outer circumferential side of the flange portion 1a and in which at least a portion thereof protrudes from the one surface 1d of the flange portion 1a.

Here, as shown in FIGS. 4(a) and 4(b), in the present embodiment, the annular portion 1b' may not necessarily contact the outer side surface of the flange disk 1. That is, the connection portion 1b of the flange disk 1 in the present embodiment may be formed so that at least a portion of the connection portion 1b welded to the steel pipe 2 protrudes from the one surface 1d side to the steel pipe 2 side, and the distance d is 5 mm or more and a pipe thickness t or less.

Moreover, the plate thickness h of the flange portion 1a of the flange disk 1 in the present embodiment is preferably 2 times or more the pipe thickness t and 200 mm or less. In this way, by setting the plate thickness to be 2 times or more the pipe thickness t, mechanical joining strength in the flange disk 1 welded steel pipe 2 can be improved. However, if the plate thickness h of the flange portion 1a is too thick, there is a concern that an increase in the manufacturing cost may occur. Thereby, an upper limit of the plate thickness h of the flange portion 1a is preferably 200 mm or less.

Moreover, in order to improve fatigue resistance strength, the welding of the present embodiment is preferably full penetration welding. However, the welding of the present embodiment may not necessarily be full penetration welding. That is, partial penetration welding, in which the welding metal portion does not necessarily penetrate the pipe thickness direction, may be used. Specifically, in an X shape groove, in the inner portion of the weld metal portion, there may be a portion in which a portion of a root face is not welded.

In the present embodiment, the groove, which is defined by the flange side groove surface 1e and the steel pipe side groove surface 2e, is preferably any one of an X shape groove, a V shape groove, a single bevel groove, a K shape groove, or a U shape groove. Moreover, if satisfying the above-described relationship between the cross-sectional area So and the cross-sectional area S_{I} is considered, the groove is more particularly the V shape groove, the X shape groove, or the K shape groove. By adopting the V shape groove, the X shape groove, or the K shape groove, the above-described relationship between the cross-sectional area So and the cross-sectional area S_{I} can be easily obtained. This is because a large compressive residual stress can be easily applied to the surface of the inner circumferential side weld metal portion 3b and the vicinity of the surface.

Moreover, when the X shape groove or the K shape groove is adopted, since large compressive stress is generated by the inner circumferential side weld metal portion, it is preferable that the steel pipe 2 and the inner circumferential side (inner surface side) of the flange disk 1 are welded to each other in advance, and thereafter, the steel pipe and the outer circumferential side (outer surface side) are welded to each other. Furthermore, in this case, by etching the cross-section of the weld metal portion, the welded surface side is easily indentified.

Furthermore, when the X shape groove or the K shape groove is adopted, the depth of the outer circumferential side groove is preferably larger than the depth of the inner circumferential side groove. Thus, large compressive residual stress can be generated on the surface of the inner circumferential side weld metal portion and in the vicinity of the surface.

Moreover, in the flange disk 1 welded steel pipe 10 of the present embodiment, the pipe thickness t of the steel pipe 2 and a thickness in the radial direction of the connection portion 1b may be different from each other. Even in the case, effects similar to the effects of the present embodiment can be obtained.

Moreover, as the steel pipe 2 which used in the flange disk 1 welded steel pipe 10 according to the present embodiment, a steel pipe having high strength and a large diameter, in which the pipe thickness t is 30 mm or more, is preferably used. The steel pipe having high strength and a large diameter may be manufactured from a structural steel pipe for welding which has a well-known component composition and in which yield strength is 315 MPa or more or 355 MPa or more. Moreover, the yield strength may be 690 MPa or less or 600 MPa or less.

Furthermore, the pipe thickness t of the steel pipe 2 is more preferably 40 mm or more, and is most preferably 50 mm or more. By adopting the pipe thickness t like this, the compressive residual stress can be more easily applied to the surface of the inner circumferential side weld metal portion and in the vicinity of the surface.

As described above, according to the flange disk-welded steel pipe of the present invention, in the cross-section including the pipe axis of the steel pipe of the weld metal portion, since the cross-sectional area of the outer circumferential side from the center in the pipe thickness direction of the steel pipe is larger than the cross-sectional area of the inner circumferential side of the steel pipe, and the distance between the weld metal portion of the inner circumferential side of the steel pipe and the flange corner is sufficiently small, compressive stress can remain on the surface of the weld metal portion of the inner circumferential side of the steel pipe and in the vicinity of the surface. Moreover, by positioning the flange corner in the generated region of the residual compressive stress, fatigue resistance properties can be improved in vibration of gigacycle range.

Thereby, in the flange disk-welded steel pipe of the present invention, the steel pipe is suitable for a steel-pipe column for a wind power generation tower in which fatigue resistance properties are required in vibration circumstances of gigacycle range.

Furthermore, in the structure of the flange disk-welded steel pipe of the present invention, compared to the structure of the related art, since the connection portion which is formed so as to surround the outer circumference of the flange portion is smaller, significant weight reduction of the flange disk can be achieved. Thereby, after a thick steel plate, which is manufactured by not forging but rolling, is cut circularly, by cutting a portion in the plate thickness direction of the thick steel plate, the flange disk can be manufactured.

That is, since the plate thickness in the outer circumferential end surface of the connection portion in the present invention has the thinner structure compared to the related art, the costly flange disk can be light weight, and thus, the manufacturing cost can be suppressed.

Furthermore, as described above, the present invention is not limited if the compressive residual stress can be applied to the flange corner, and the groove shape or the position in the junction (weld metal portion) is not limited within a scope which does not depart from the gist of the present invention. Moreover, similarly, the welding method is also not limited.

Furthermore, according to welding efficiency or the holding machine, the groove shape and the position may be adjusted so that the flange corner is positioned in the region in which compressive residual stress is generated. Moreover, the compressive residual stress can be measured by measurement of the residual stress by X-ray or by a strain gauge.

### [Example]

Next, an Example of the present invention will be described. However, the conditions in the Example are an example conditions which are adopted so as to confirm feasibility and effects of the present invention, and the present invention is not limited to the example conditions.

If the object of the present invention is achieved without departing from the gist of the invention, the present invention may adopt various conditions and combinations of the conditions.

### (Example)

By using a steel pipe having component composition and mechanical characteristics shown in Table 1, a flange disk, and a weld wire which is specified in JIS Z 3313 YFL-C506R and which has a diameter of 1.2 mm, the flange disk-welded steel pipe was manufactured under the welding conditions of a current of 200 A, a voltage of 21 V, a welding speed of 7 cpm to 25 cpm, and a shield gas Ar + 20% CO₂ (25 l/min). Moreover, regarding the tensile strength of the steel pipe used in the present embodiment, in case that the plate thickness (pipe thickness) is less than 50mm, No. U1 test piece which is defined in the Inspection Point (K Part Material), Steel Boat Rule, Nippon Kaiji Kyokai (NK) was manufactured, and in case that the plate thickness (pipe thickness) is more than 50mm, JIS Z2201 No. 14A test piece was manufactured, thereafter, tension test were performed, and the tensile strength were measured.

Furthermore, the pipe thickness t of the used steel pipe, the plate thickness h of the flange portion of the flange disk, the length h1 in the pipe axis direction of the outer side surface of the flange disk, a ratio h1/h between the plate thickness h and the length h1, and the groove shapes are shown in Table 2 and Table 3. Moreover, in the Present Example, the diameter of the used steel pipe was 700 mm.

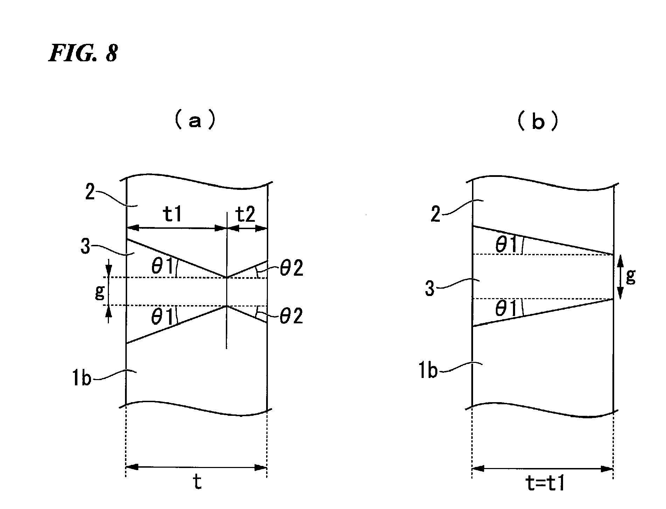

Here, as the type of the groove shape, either the X shape groove shown in Fig 8(a) or the V shape groove shown in FIG 8(b) was adopted. In the weld metal portion 3 (welded portion), a distance t1 from the outer circumferential side of the welded portion to the root face, a distance t2 from the inner circumferential side of the welded portion to the root face, groove angles θ1 and θ2, and a root gap g are shown in Table 2 and Table 3 respectively. Moreover, in the case of the V shape groove as shown in FIG 8(b), the distance t1 from the outer circumferential side of the welded portion to the root face and the pipe thickness t are the same as each other.

Next, the weld metal portion in the steel pipe to which the obtained flange disk was welded was cut in the pipe axis direction. In the cut surface of the weld metal portion, the cross-sectional area So of the outer circumferential side from the center in the pipe thickness direction and the cross-sectional area S_{I} of the inner circumferential side were measured respectively, and a cross-section ratio S_{O}/S_{I} between So and S_{I} was obtained.

Moreover, the distance d between the flange disk side weld toe of the weld metal portion of the inner circumferential side and the flange corner was measured, and a ratio between the distance d and the pipe thickness t was obtained.

Next, regarding performance of the steel pipe to which the obtained flange disk was welded, mechanical characteristics shown in Tables 2 and 3 were evaluated. The evaluation method will be described below.

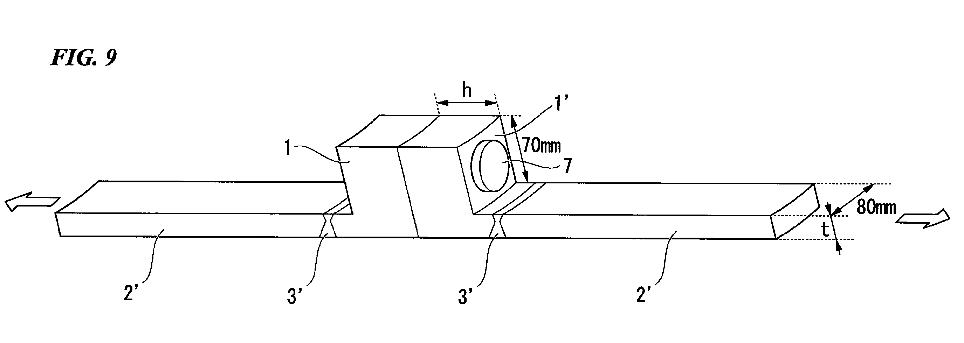

First, after the steel pipes to which the obtained flange disk was welded were connected to each other so as to be fastened by bolts 7, as shown in FIG 9, a plate-like test piece having a width of 80 mm was cut and taken out, a fatigue test was performed to the test piece at room temperature atmosphere under the conditions of a stress ratio of -1 and a repetition rate of 10 Hz to 30 Hz, and joint fatigue strength F1, in which rupture life was 2 million times (2×10⁶ times) in the number of repetitions, was measured. The results are shown in Tables 2 and 3.

On the other hand, since the measurement of the fatigue strength at a gigacycle requires an extremely long time in a general fatigue tester, joint fatigue strength F2 corresponding to a gigacycle (1×10⁹ times) was estimated by a method described below and evaluated. The estimation method of the joint fatigue strength F2 will be described.

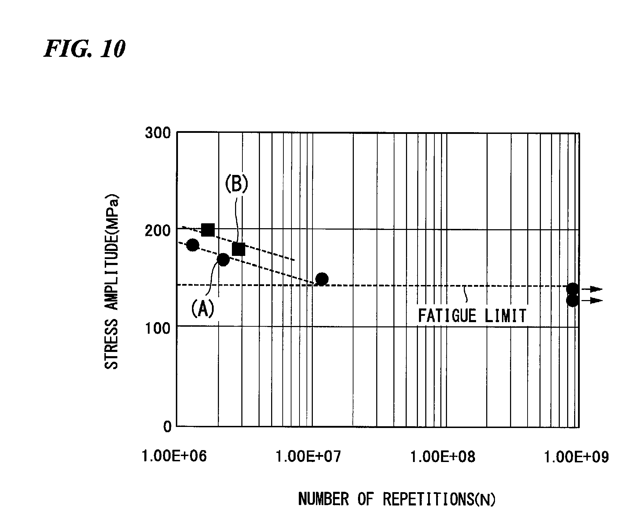

First, in a groove condition of test number 3, similar to F1, the flange disk-welded steel pipe was cut into the plate-like test piece having a width of 80 mm and was taken out, and tests were performed by changing the stress from 250 MPa in stress amplitude in the steel pipe axis direction to 5 levels at room temperature in a condition of a stress ratio of -1 and a repetition rate of 10 Hz to 30 Hz. As shown in (A) of FIG. 10, as a result, the test piece was ruptured when the number of repetitions was approximately at 1.3×10⁶, 2.2×10⁶, and 1.2×10⁷ respectively, and when the stress amplitude was 140 MPa and 130 MPa, the test piece was not ruptured even though the number of repetitions was 1×10⁹. As understood from (A) of FIG. 10, it is considered that the fatigue strength approximately reaches a fatigue limit between 1×10⁷ times and 1×10⁸ times, and the fatigue strength is not substantially decreased between 1×10⁸ times and 1×10⁹ times. Moreover, since the steel material used in the present Example has a range of approximately 500 MPa to 800 MPa in the tensile strength, it is considered that the fatigue limit (145 MPa in the Present Example) is shown between 1×10⁷ times and 1×10⁸ times as shown in (A) of FIG. 10 even when the welding condition is changed. The joint fatigue strength F2 was evaluated at a gigacycle (1×10⁹ times) using the relationship. Specifically, the fatigue strength at 2×10⁶ in the plate-like test piece estimated from (A) of FIG 10 and the fatigue strength at 1×10⁸ times corresponding to the fatigue limit were compared with each other, and a decreasing rate between two conditions was obtained. The decreasing rate was multiplied to the joint fatigue strength F1 of 2×10⁶ times which is obtained with each groove condition, and the joint fatigue strength (estimated value) F2 at a gigacycle was obtained. Moreover, the decreasing rate was 85%.

Here, a preliminary fatigue test was performed using a steel pipe which simulated an actual product and to which a flange disk simulating an actual product was welded, and was compared with the fatigue test results in the plate-like test piece.

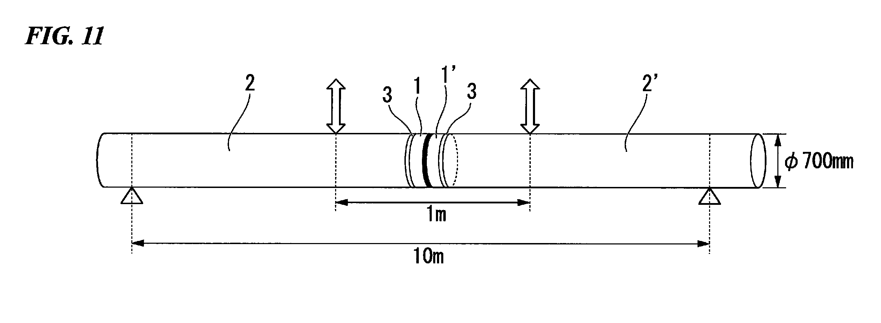

In the preliminary fatigue test, first, as shown in FIG. 11, the flange disk 1 having the plate thickness of 80 mm was welded to the steel pipe 2, which simulated an actual product and had a diameter of 700 mm and a pipe thickness of 40 mm, by the groove shape of the test number 3 of Table 2. Moreover, similarly, a steel pipe 2' and a flange disk 1' were also welded to each other by the groove shape of the test number 3, and the flange disk-welded steel pipe was prepared. The flange disks 1 and 1' were fastened by bolts and a pipe joint was prepared.

Next, as shown in FIG 11, both ends of the pipe joint were fixed to each other, two locations (refer to arrow locations in FIG 11 in the center portion were oscillated in arrow directions, and a four-point bending test was performed. Moreover, both ends were fixed so as to sufficiently secure elongation, shrinkage, and a degree of freedom with respect to rotation of a member due to elastic deformation. Moreover, the preliminary fatigue test was performed at a room temperature atmosphere in a condition of a stress ratio of -1, a repetition rate of 0.1 Hz to 0.3 Hz, and stress amplitude of 180MPa and 200MPa. Moreover, the joint fatigue strength A1, in which the rupture life was 2 million times (2×10⁶ times) in the number of repetitions, was obtained. As a result, in the test number 3, results as shown in (B) of FIG. 10 were obtained. That is, in the fatigue strength in each of the steel pipe which simulated an actual product and to which the flange disk was welded and the plate-like test piece cut from the steel pipe, a result of A1>F1 was obtained. It is assumed that this is because a restrain state of welding deformation in the flange disk-welded steel pipe is different from the restrain state in the plate-like test piece which is shown in FIG. 9 and cut and taken out from the steel pipe. That is, since a restraining force with respect to the welding deformation in the flange disk-welded steel pipe is larger, it is considered that a residual stress larger than the plate-like test piece is generated. Thereby, the effects in the present invention were exerted in the flange disk-welded steel pipe. However, since it could be confirmed that the effects of the present invention were also exerted remarkably in the plate-like test piece, in the present Example, evaluation was performed on the plate-like test piece.

Moreover, when the test piece was prepared, since the test piece was fixed and prepared so that welding deformation was not generated, the residual stress of the test piece further approached the residual stress state of the flange disk-welded steel pipe, as much as possible.

Next, the residual stress of the flange corner in the steel pipe axis direction was measured by applying an intercept method. A single axis type of strain gauge (FLG-02-11 or the like manufactured by Tokyo Sokki Co., Ltd.) was attached in parallel in the steel pipe axis direction in the vicinity of the flange comer of the steel pipe inner surface side, and measurement was performed. Moreover, at this time, when the distance d between the flange corner and the inner surface side weld toe was less than 7 mm, since the space for installing the strain gauge could not be secured, and measurement was not performed.

The fatigue resistance properties of the flange disk-welded steel pipe were evaluated as follows.

In the joint fatigue strength F2 at a gigacycle which was obtained from the above-described fatigue test, satisfying F2>110 MPa was evaluated to acceptance in the fatigue resistance properties of the joint.

The above-described measurement results and evaluation results are shown in Table 2 and 3.

**[Table 1]**

| Steel Pipe Kind | Component Exposition (mass%) | | | | | | | | Yield Strength | Tensile Strength |
|---|---|---|---|---|---|---|---|---|---|---|
| | C | Mn | Si | P | S | Ni | Cr | N | (MPa) | (MPa) |
| B1 | 0.1 | 1.2 | 0.41 | 0.003 | 0.003 | 0.5 | 0.2 | 0.005 | 432 | 632 |
| B2 | 0.2 | 1.5 | 0.25 | 0.003 | 0.004 | 1.1 | 0.2 | 0.004 | 511 | 745 |
| B3 | 0.05 | 2.1 | 0.21 | 0.004 | 0.004 | 0.5 | 0 | 0.004 | 392 | 521 |

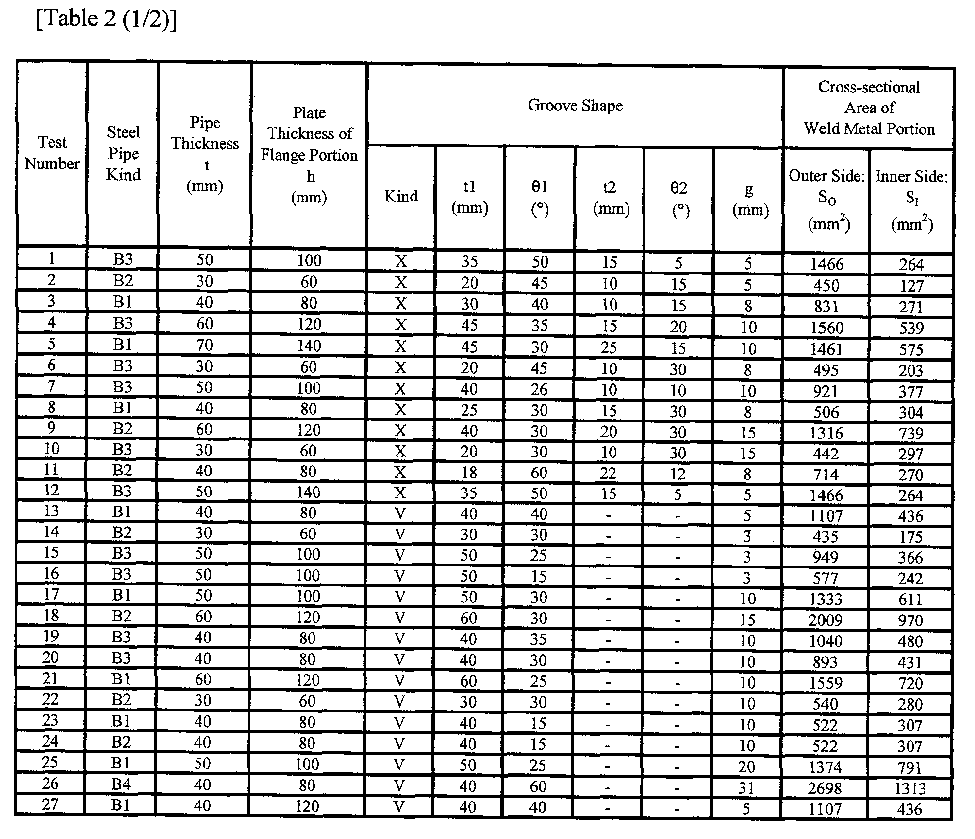

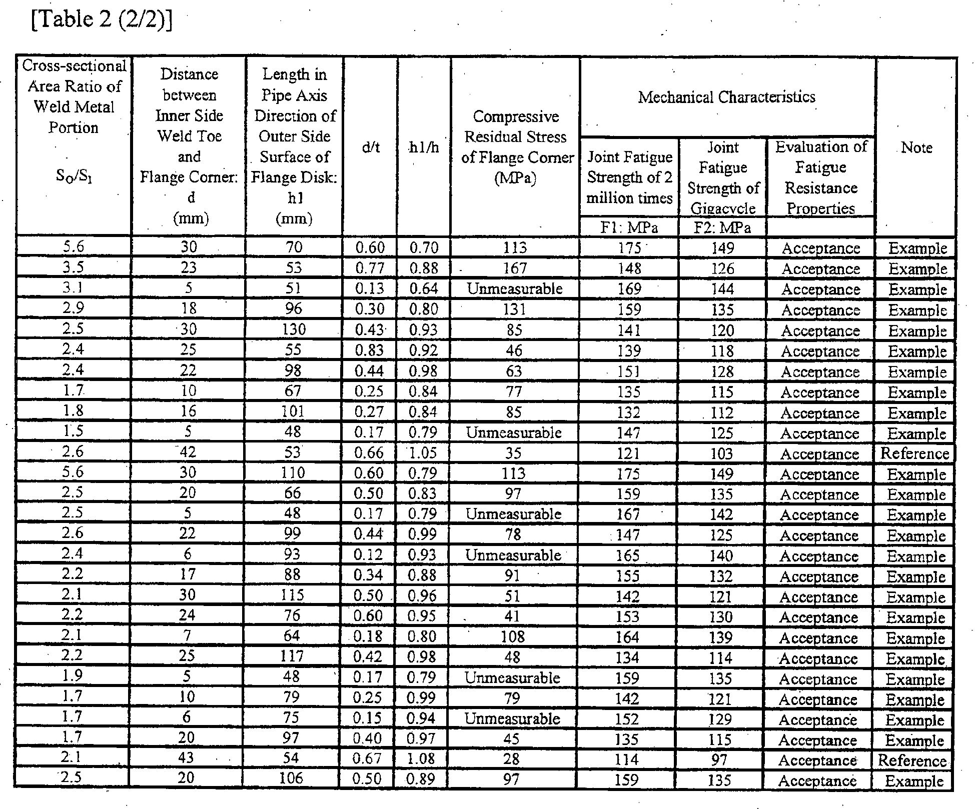

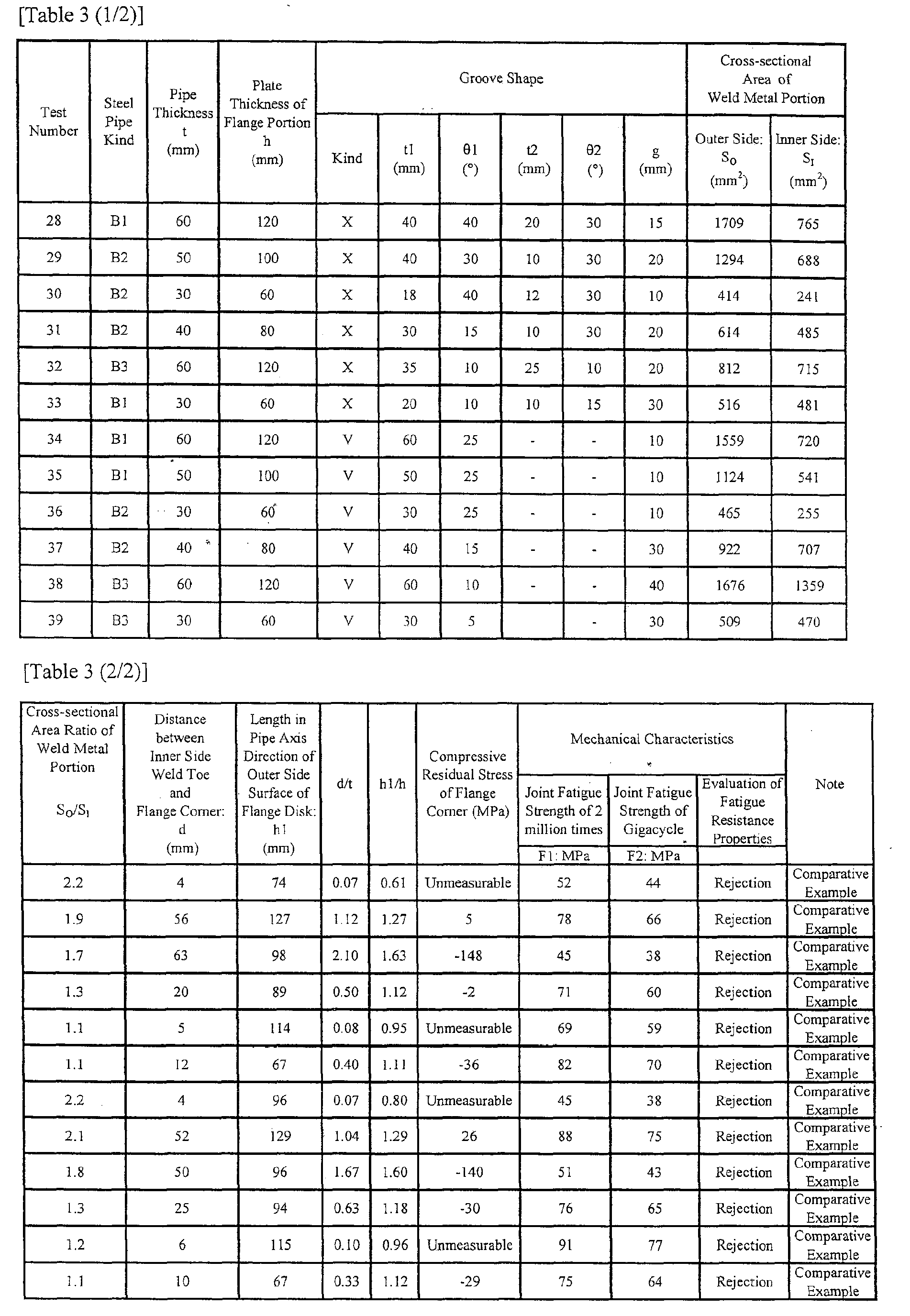

In Table 2, test numbers 1 to 27 are Examples of the present invention and entirely satisfy the conditions of the present invention, and the joint fatigue strength at 2 million times (2×10⁶ times) and the joint fatigue strength at a gigacycle (1×10⁹ times) were good.

In Comparative Examples of test numbers 29, 30, 35, and 36 shown in Table 3, since the distance d between the weld toe of the weld metal portion of the inner circumferential side and the flange corner was too large, compressive residual stress could not be applied to the flange corner, the fatigue strength at 2 million times in the number of repetitions and at a gigacycle was largely decreased.

On the other hand, in Comparative Examples of test numbers 28 and 34, since the distance d was too small, fatigue cracks were generated from the toe of the welded portion which was a portion in which stress was concentrated, and both of the fatigue strength at 2 million times in the number of repetitions and the fatigue strength at a gigacycle was decreased significantly.

In Comparative Examples of test numbers 31 to 33 and 37 to 39, since the cross-section ratio of the weld metal portion was less than 1.5, sufficient compressive residual stress could not be applied to the region from the inner circumferential side surface of the weld metal portion to the flange corner, and thus, both of the fatigue strength at 2 million times in the number of repetitions and the fatigue strength at a gigacycle were decreased significantly.

### [Industrial Applicability]

The flange disk-welded steel pipe of the present invention has fatigue properties which endure repetition of gigacycle range, and can be applied to a steel pipe for an offshore wind power generation tower.

Reference signs used in the description are listed as below.
1, 1', 101, and 101': flange disk(flange)
1a, 101a, 101a': flange portion
1b, 101b, 101b' : connection portion
1b': annular portion
1c and 101c: flange corner
1d and 101d: one surface(surface) of flange portion
1e: flange side groove surface
1e': weld toe of inner circumferential side
2, 2', 102, and 102': steel pipe
2e: steel pipe side groove surface
3, 3', 103, and 103': weld metal portion
3a and 103a: outer circumferential side weld metal portion
3b and 103b: inner circumferential side weld metal portion
10 and 110: flange disk-welded steel pipe
d: distance
h: plate thickness of flange portion
h1: length in pipe axis direction of side surface of outer circumference portion of connection portion
t: pipe thickness of steel pipe
107: bolt
111: basic structure
112: steel-pipe column
113: nacelle
114: turbine blade

## Claims

1. A flange disk-welded steel pipe (10) in which a flange disk (1) is welded at an end of the steel pipe (2) in a pipe axis direction, the flange disk-welded steel pipe (10) comprising:
the flange disk (1) which includes a flange portion (1a) having a flat ring shape, and a connection portion (1b) which is positioned at an outer circumferential side of the flange portion (1a) and has an annular portion (1b') in which at least a portion thereof protrudes from one surface side (1d) of the flange portion (1a);
the steel pipe (2) is welded to said one surface side (1d) of the connection portion (1b) and has a pipe thickness t; and
a weld metal portion (3) which is formed by welding between the connection portion (1b) and the steel pipe (2), wherein
in the cross-section including a pipe axis of the steel pipe (2), the weld metal portion (3) is formed so that a cross-sectional area So of an outer circumferential side from a center line (C-C) of the steel pipe (2) in a pipe thickness direction of the steel pipe (2) and a cross-sectional area S_{I} of an inner circumferential side of the steel pipe (2) satisfy a relationship of S_{O}≥1.5S_{I},
a distance (d), between a weld toe (1e') of a flange portion side in an inner surface side of the weld metal portion (3) and a flange comer (1c) which is a portion where an inner surface of the connection portion (1b) and the one surface (1d) of the flange portion cross,
has a lower limit of 5 mm or more and an upper limit of the pipe thickness (t) or less, and
a length (h1) in the pipe axis direction of a side surface of an outer circumferential side of the flange disk (1) is smaller than a plate thickness of the flange portion (1a).

2. The flange disk-welded steel pipe (10) according to Claim 1, **characterized in that** a compressive residual stress is formed on the flange comer (1c) by the welding.

3. The flange disk-welded steel pipe (10) according to Claim 1, **characterized in that** the pipe thickness (t) of the steel pipe (2) is 30 mm or more.

4. The flange disk-welded steel pipe (10) according to Claim 1, **characterized in that** the steel pipe (2) is used in a steel-pipe column of a wind power generation tower.

## Patentansprüche

1. Stahlrohr (10) mit angeschweißter Flanschscheibe, bei dem eine Flanschscheibe (1) an einem Ende des Stahlrohrs (2) in Rohrachsenrichtung angeschweißt ist, wobei das Stahlrohr (10) mit angeschweißter Flanschscheibe aufweist:
die Flanschscheibe (1), die einen Flanschabschnitt (1a) mit einer Flachringform und einen Verbindungsabschnitt (1b) aufweist, der an einer Außenumfangsseite des Flanschabschnitts (1a) positioniert ist und einen ringförmigen Abschnitt (1b') hat, in dem mindestens ein Abschnitt davon von einer Oberflächenseite (1d) des Flanschabschnitts (1a) vorsteht;
das Stahlrohr (2) mit der einen Oberflächenseite (1d) des Verbindungsabschnitts (1b) verschweißt ist und eine Rohrdicke t hat; und
einen Schweißmetallabschnitt (3), der durch Schweißen zwischen dem Verbindungsabschnitt (1b) und dem Stahlrohr (2) gebildet ist, wobei im Querschnitt, der eine Rohrachse des Stahlrohrs (2) aufweist, der Schweißmetallabschnitt (3) so gebildet ist, dass eine Querschnittfläche S_{O} einer Außenumfangsseite von einer Mittellinie (C-C) des Stahlrohrs (2) in Rohrdickenrichtung des Stahlrohrs (2) und eine Querschnittfläche S_{I} einer Innenumfangsseite des Stahlrohrs (2) eine Beziehung S_{O} ≥ 1,5S_{I} erfüllen,
ein Abstand (d) zwischen einem Schweißnahtgrund (1e') einer Flanschabschnittseite in einer Innenflächenseite des Schweißmetallabschnitts (3) und einer Flanschecke (1c), die ein Abschnitt ist, in dem sich eine Innenfläche des Verbindungsabschnitts (1b) und die eine Oberfläche (1d) des Flanschabschnitts kreuzen, eine Untergrenze von mindestens 5 mm und eine Obergrenze von höchstens der Rohrdicke (t) hat und
eine Länge (h1) in Rohrachsenrichtung einer Seitenfläche einer Außenumfangsseite der Flanschscheibe (1) kleiner als eine Blechdicke des Flanschabschnitts (1a) ist.

2. Stahlrohr (10) mit angeschweißter Flanschscheibe nach Anspruch 1,
**dadurch gekennzeichnet, dass** eine Druckrestspannung an der Flanschecke (1c) durch das Schweißen gebildet ist.

3. Stahlrohr (10) mit angeschweißter Flanschscheibe nach Anspruch 1,
**dadurch gekennzeichnet, dass** die Rohrdicke (t) des Stahlrohrs (2) mindestens 30 mm beträgt.

4. Stahlrohr (10) mit angeschweißter Flanschscheibe nach Anspruch 1,
**dadurch gekennzeichnet, dass** das Stahlrohr (2) in einer Stahlrohrsäule des Turms einer Windkraftanlage verwendet wird.

## Revendications

1. Tube d'acier soudé à un disque à bride (10), dans lequel un disque à bride (1) est soudé au niveau d'une extrémité du tube d'acier (2) dans une direction d'axe de tuyau, le tube d'acier soudé à un disque à bride (10) comprenant :
le disque à bride (1) qui inclut une partie de bride (1a) ayant une forme annulaire plate, et une partie de connexion (1b) qui est positionnée au niveau d'un côté circonférentiel extérieur de la partie de bride (1a) et a une partie annulaire (1b'), dans laquelle au moins une partie de celle-ci fait saillie d'un côté de surface (1d) de la partie de bride (1a) ;
le tube d'acier (2) est soudé audit un côté de surface (1d) de la partie de connexion (1b) et a une épaisseur de tube t ; et
une partie métallique soudée (3) qui est formée par soudage entre la partie de connexion (1b) et le tube d'acier (2), dans lequel
dans la section transversale incluant un axe de tube du tube d'acier (2), la partie métallique soudée (3) est formée de telle sorte que
une zone de section transversale S_{O} d'un côté circonférentiel extérieur depuis une ligne centrale (C-C) du tube d'acier (2) dans une direction d'épaisseur de tube du tube d'acier (2) et une zone de section transversale S_{I} d'un côté circonférentiel intérieur du tube d'acier (2) satisfont à un rapport de S_{O}≥1,5S_{I},
une distance (d), entre un raccordement soudé (1e') d'un côté de partie de bride dans un côté de surface intérieure de la partie métallique soudée (3) et un coin de bride (1c) qui est une partie où une surface
intérieure de la partie de connexion (1b) et l'une surface (1d) de la partie de bride se croisent, a une limite inférieure de 5 mm ou plus et une limite supérieure de l'épaisseur de tube (t) ou moins, et
une longueur (h1) dans la direction d'axe de tube d'une surface de côté d'un côté circonférentiel extérieur du disque à bride (1) est plus petite qu'une épaisseur de plaque de la partie de bride (1a).

2. Tube d'acier soudé à un disque à bride (10) selon la revendication 1,
**caractérisé en ce qu'**une contrainte résiduelle compressive est formée sur le coin de bride (1c) par le soudage.

3. Tube d'acier soudé à un disque à bride (10) selon la revendication 1,
**caractérisé en ce que** l'épaisseur de tube (t) du tube d'acier (2) est de 30 mm ou plus.

4. Tube d'acier soudé à un disque à bride (10) selon la revendication 1,
**caractérisé en ce que** le tube d'acier (2) est utilisé dans une colonne de tube d'acier d'une tour d'éolienne.
